# EUROPÄISCHE PATENTSCHRIFT

(11) **EP 2 660 749 B1**
(45) Veröffentlichungstag und Bekanntmachung des Hinweises auf die Patenterteilung: **30.11.2016**
(21) Anmeldenummer: 12166504.6
(22) Anmeldetag: 03.05.2012
(51) Int. Cl.: G06F 21/35

(54) **Bedienvorrichtung mit Authentifizierungsmittel**
Operating device with authentication means
Dispositif de commande avec moyen d'authentification

(43) Veröffentlichungstag der Anmeldung: 06.11.2013
(73) Patentinhaber: Siemens Aktiengesellschaft, 80333 München (DE)
(72) Erfinder: Jöhnßen, Oliver, 91058 Erlangen (DE)

(56) Entgegenhaltungen:
- WO-A1-98/12670
- US-A1- 2003 034 877
- US-B1- 6 216 230

## Beschreibung

Die Erfindung betrifft eine Bedienvorrichtung für eine industrielle Automatisierungsanordnung, mit einem Sensorbildschirm und einem Authentifizierungsmittel.

Im industriellen Umfeld zum Bedienen und Beobachten von Industrieanlagen bzw. industriellen Automatisierungsanlagen werden häufig Bedienvorrichtungen oder Bedien- und Beobachtungsgeräte eingesetzt. Insbesondere werden diese Bedienvorrichtungen zum Bedienen von sicherheitsgerichteten Bedienschritten für Maschinen oder Anlagenteilen eingesetzt.

Derzeitige Bedienvorrichtungen besitzen als ein Authentifizierungsmittel einen mechanischen Schlüsselschalter. Von Nachteil ist es, dass bei den bekannten Bedienvorrichtungen ein Extra-Bauteil, nämlich der Schlüsselschalter, in der Bedienvorrichtung eingebaut werden muss und auch der entsprechende Schlüssel muss dazu bereitgestellt werden.

Mit dem bekannten Schlüsselschalter ergeben sich folgende Probleme:
- Der Schlüsselschalter als zusätzliches Hardware-Bauteil zum Einbau in eine Bedienvorrichtung trägt zur Erhöhung der Produktionskosten bei, da dieses Bauteil im Vergleich zu den anderen Komponenten sehr teuer ist.
- Der Schlüsselschalter ist ein mechanisches Bauteil, für welches zusätzliche Typprüfungen nötig sind, um das Gerät zuzulassen.
- Bei einem versehentlichen Fallenlassen der Bedienvorrichtung, beispielsweise bei einem mobilen Panel, kann der gesteckte Schlüssel im Schlüsselschalter in der Bedienvorrichtung abbrechen, so dass die Bedienvorrichtung zur Reparatur eingeschickt werden muss.

In der US 2013/034877 A1 wird ein elektrisches Gerät mit einer Kontrolleinheit offenbart, wobei die Kontrolleinheit mit einem Empfänger verbunden ist und der Empfänger Signale von einem Authentifizierungsmittel empfängt.

In der US 6 216 230 B1 ist ein Computer offenbart, welcher über eine zusätzliche Schnittstelle in die ein zusätzlicher Stecker mit einem Authentifizierungsmittel gesteckt wird. Die WO 98/12670 A1 offenbart ein ähnliches System.

Es ist daher die Aufgabe der Erfindung, eine Bedienvorrichtung bereitzustellen, welche mit einem Authentifizierungsmittel auskommt, welches vorgenannte Nachteile nicht mit sich bringt.

Bei der Bedienvorrichtung für eine industrielle Automatisierungsanordnung, mit einem Sensorbildschirm und einem Authentifizierungsmittel, wird die Aufgabe durch die Merkmale des Anspruchs 1 gelöst. Dabei ist das Authentifizierungsmittel ausgebildet, einen Authentifizierungscode als eine Lichtimpulsfolge zu empfangen und mit einem hinterlegten Code zu vergleichen und bei Gleichheit eine Bedienung am Sensorbildschirm freizugeben.

Da die vorgenannten Sensoren aufgrund ihres Funktionsprinzips anhand von Lichtstrahlen eine Berührungsposition eines Bedieners auf dem Sensorbildschirm auswerten, wird mit dem vorhandenen Mitteln auch eine Lichtimpulsfolge für den Authentifizierungscode ausgewertet.

Der Sensorbildschirm umfasst einen Sensor und einen Bildschirm, wobei der Sensor und der Bildschirm zusammen als ein Touchscreen nach der In-Cell-Technologie ausgestaltet sind. Der Sensor und der Bildschirm sind in dieser Technologie zu einer baulichen Einheit zusammenfasst und auch bei dieser Technologie wird das Funktionsprinzip der Erkennung einer Berührungsposition dafür benutzt, die Lichtimpulsfolge aufzunehmen und als ein Authentifizierungscode an ein Authentifizierungsmittel weiterzuleiten.

Eine weiterführende Ausgestaltung sieht vor, dass das Authentifizierungsmittel ausgebildet ist, die Lichtimpulsfolge einem Bediener zuzuordnen und daraufhin ein Benutzerprofil anzulegen, welches bei erneuter erfolgreicher Authentifizierung geladen wird.

Ist der Sensorbildschirm als ein Touchscreen mit der In-Cell-Technologie ausgestaltet, so ist innerhalb des Aufbaus dieser In-Cell-Technologie der Touchscreen derart ausgestaltet, dass an dem vorbestimmten Ort ein Fotosensor dazu ausgebildet ist, die Lichtimpulsfolge zu empfangen und an das Authentifizierungsmittel weiterzuleiten.

Gemäß der Zeichnung ist ein Ausführungsbeispiel der Bedienvorrichtung dargestellt. Es zeigen
- FIG 1: eine Bedienvorrichtung für eine industrielle Automatisierungsanordnung mit einem Sensorbildschirm und einem Authentifizierungsmittel und
- FIG 2: einen Touchscreen in der In-Cell-Technologie.

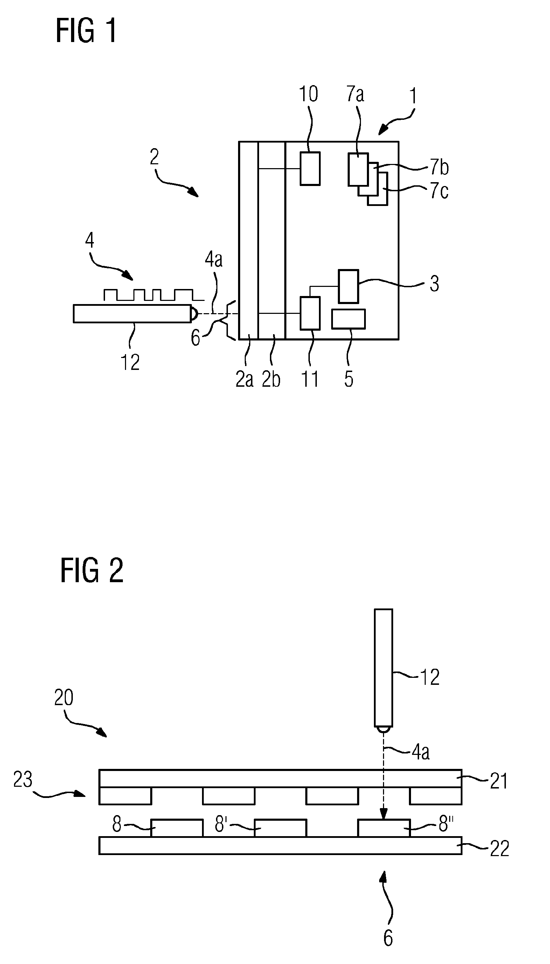

Gemäß FIG 1 wird über einen an den Sensorbildschirm 2 herangeführten Lichtimpulsgenerator 12 durch einen Bediener eine Lichtimpulsfolge 4a als ein Authentifizierungscode 4 an einem Ort 6 auf die Bedienvorrichtung 1 gerichtet. Ein Empfangsmittel 11 leitet die empfangene Lichtimpulsfolge 4a zu dem Authentifizierungsmittel 3 weiter. Stimmt die empfangene Lichtimpulsfolge 4a, also der Authentifizierungscode 4, mit einem hinterlegten Code 5 überein, so wird an dem Sensorbildschirm 2 für den Bediener eine Bedienung freigegeben.

Weiterhin ist der Sensor 2a mit einem Mikrocontroller 10 verbunden, welcher die Berührungspositionen eines Bedieners auf den Sensor auswertet.

Das Authentifizierungsmittel 3 ist weiterhin dazu ausgebildet, die Lichtimpulsfolge 4a einem Bediener zuzuordnen und daraufhin ein Benutzerprofil anzulegen. Meldet sich ein Benutzer mit einer ihm zugeordneten Authentifizierung erneut bei der Bedienvorrichtung 1 an, so kann nach erfolgreicher Authentifizierung ein ihm zugeordnetes Benutzerprofil geladen werden. Es stehen beispielsweise ein erstes Benutzerprofil 7a, einen zweites Benutzerprofil 7b und ein drittes Benutzerprofil 7a zur Verfügung.

Gemäß der FIG 2 ist ein Touchscreen 20 nach der In-Cell-Technologie dargestellt. Ein Farbfilter 21 und ein TFT-Display 22 bilden eine bauliche Einheit. Bei der In-Cell-Technologie ist jedem Pixel ein Fotosensor 8 zugeordnet. Es ist eine Pixelrasterung 23 dargestellt, wobei ein erster Fotosensor 8, ein zweiter Fotosensor 8' und ein dritter Fotosensor 8'' jeweils einem Pixel zugeordnet ist. Über den Lichtimpulsgenerator 12 wird an dem Ort 6 die Lichtimpulsfolge 4a auf den dritten Fotosensor 8'' gerichtet, welcher dazu ausgebildet ist, die Lichtimpulsfolge 4a an das Authentifizierungsmittel 3 (siehe FIG 1) weiterzuleiten und als ein Authentifizierungscode 4 mit einem hinterlegten Code 5 zu vergleichen.

## Patentansprüche

1. Bedienvorrichtung (1) für eine industrielle Automatisierungsanordnung, mit
einem Sensorbildschirm (2),
einem Authentifizierungsmittel (3),
**dadurch gekennzeichnet, dass**
das Authentifizierungsmittel (3) ausgebildet ist, ein Authentifizierungscode (4) als eine Lichtimpulsfolge (4a) zu empfangen und mit einem hinterlegten Code (5) zu vergleichen und bei Gleichheit eine Bedienung am Sensorbildschirm (2) freizugeben, wobei der Sensorbildschirm (2) einen Sensor (2a) und einen Bildschirm (2b) umfasst, wobei der Sensor (2a) und der Bildschirm (2b) zusammen als ein Touchscreen nach der In-Cell-Technologie ausgestaltet sind, wobei der Sensorbildschirm (2) ausgestaltet ist die Lichtimpulsfolge (4a) an einem auf dem Bildschirm (2b) vorbestimmten Ort (6) zu empfangen und an das Authentifizierungsmittel (3) weiterzuleiten, wobei der Touchscreen mit der In-Cell-Technologie derart ausgestaltet ist, dass jedem Pixel ein Fotosensor zugeordnet ist und, dass an dem vorbestimmten Ort (6) ein Fotosensor (8) dazu ausgebildet ist, die Lichtimpulsfolge zu empfangen und an das Authentifizierungsmittel (3) weiterzuleiten, wobei mit den vorhandenen Mitteln der Fotosensoren der In-Cell-Technologie auch die Lichtimpulsfolge (4a) für den Authentifizierungscode empfangen wird.

## Claims

1. Operating device (1) for an industrial automation arrangement, with
a sensor display (2),
an authentication means (3),
**characterised in that**
the authentication means (3) is embodied to receive an authentication code (4) as a light impulse sequence (4a) and to compare it with a stored code (5) and, if these are identical, to release an operation on the sensor display (2), wherein the sensor display (2) comprises a sensor (2a) and a display (2b), wherein the sensor (2a) and the display (2b) are developed together as a touch screen based on in-cell technology, wherein the sensor display (2) is developed to receive the light impulse sequence (4a) at a predetermined location (6) on the display (2b) and to forward it to the authentication means (3), wherein the touch screen with the in-cell technology is developed such that each pixel is assigned a photosensor and that at the predetermined location (6) a photosensor (8) is developed to receive the light impulse sequence and to forward it to the authentication means (3), wherein the available means of the photosensors of the in-cell technology also receives the light impulse sequence (4a) for the authentication code.

## Revendications

1. Système (1) de commande d'un dispositif d'automatisation industrielle comprenant
un écran (2) à capteur,
un moyen (3) d'authentification,
**caractérisé en ce que**
le moyen (3) d'authentification est constitué pour recevoir, sous la forme d'une séquence (4a) d'impulsions lumineuses, un code (4) d'authentification et pour le comparer à un code (5) mémorisé et pour, s'il y a égalité, libérer une commande à l'écran (2) à capteur, l'écran (2) à capteur comprenant un capteur (2a) et un écran (2b), le capteur (2a) et l'écran (2b) étant conformés ensemble sous la forme d'un écran tactile suivant la technologie In-Cell, l'écran (2) à capteur étant conformé pour recevoir la séquence (4a) d'impulsions lumineuses en un emplacement (6) déterminé à l'avance sur l'écran (2b) et l'acheminer au moyen (3) d'authentification, l'écran tactile ayant la technologie In-Cell étant conformé de manière à associer un photo-capteur à chaque pixel, et **en ce que**, à l'emplacement (6) déterminé à l'avance, un photo-capteur (8) est constitué pour recevoir la séquence d'impulsions lumineuses et l'acheminer au moyen (3) d'authentification, dans lequel la séquence (4a) d'impulsions lumineuses pour le code d'authentification est reçue aussi par les moyens présents des photo-capteurs de la technologie In-Cell.
